**Europäisches Patentamt**

**European Patent Office**

**Office européen des brevets**

(11) Numéro de publication : **0 482 344 B1**

(12)

# FASCICULE DE BREVET EUROPEEN

(45) Date de publication du fascicule du brevet :
27.04.94 Bulletin 94/17

(51) Int. Cl.⁵ : **C07C 31/02, C07C 29/09, C05F 11/00**

(21) Numéro de dépôt : **91115616.4**

(22) Date de dépôt : **14.09.91**

(54) **Procédé d'obtention de composés insaponifiables.**

(30) Priorité : **23.10.90 CH 3382/90**

(43) Date de publication de la demande :
**29.04.92 Bulletin 92/18**

(45) Mention de la délivrance du brevet :
**27.04.94 Bulletin 94/17**

(84) Etats contractants désignés :
**AT BE CH DE DK ES FR GB GR IT LI LU NL SE**

(56) Documents cités :
**EP-A- 0 162 127**
**FR-A- 755 489**
**US-A- 3 983 147**

(73) Titulaire : **SOCIETE DES PRODUITS NESTLE S.A.**
**Case postale 353**
**CH-1800 Vevey (CH)**

(72) Inventeur : **Bertholet, Raymond**
**Ch. Vers-chez-Cochard 11**
**CH-1807 Blonay (CH)**

## Description

La présente invention a trait à un procédé d'obtention de composés insaponifiables provenant de cires naturelles d'origine animale ou végétale.

La saponification d'une cire permet l'obtention de deux fractions principales, dont la composition précise dépend de celle de la cire, mais qui contiennent principalement:
- des sels d'acides gras généralement hydrosolubles pour la fraction saponifiée,
- des composés organiques à longue chaîne ($C_{22}$-$C_{34}$) tels que des alcools aliphatiques, insolubles dans l'eau, pour la fraction insaponifiée.

Certains des composés contenus dans la fraction insaponifiée, appelés dans la suite de la présente description composés insaponifiables peuvent s'avérer particulièrement intéressants, tels quels ou après isolation et purification, par exemple comme substance nutritive pour les plantes.

Ainsi, il est connu, par exemple par le brevet GB 2 105 699, de saponifier une cire végétale dans un mélange benzène-éthanol, d'évaporer les solvants après saponification puis d'extraire du résidu, à l'aide d'un solvant organique non miscible à l'eau, un composé pouvant être employé, tel quel, en solution aqueuse ou en combinaison avec un émulsifiant, comme substance nutritive pour les plantes. Un tel procédé nécessite toutefois l'emploi de grandes quantités de solvants variés, ce qui peut poser des problèmes de coût et/ou de sécurité lors d'une exploitation industrielle.

La présente invention a pour but de proposer un procédé permettant l'obtention de composés insaponifiables provenant de cires naturelles, ledit procédé étant simple et aisé à mettre en oeuvre, même au sein d'une exploitation industrielle, car n'utilisant qu'un seul solvant, en quantités modérées, pendant toute sa mise en oeuvre.

La présente invention a donc pour objet un procédé dans lequel on saponifie une cire deshuilée dans un solvant organique non miscible à l'eau en présence d'un alcali, on acidifie le mélange saponifié jusqu'à pH 2,5-4,0, par ajout d'une solution aqueuse d'acide, on écarte la phase aqueuse, on ajoute un hydroxyde de métal alcalino-terreux à la phase organique, on écarte les éventuels insolubles formés et l'on évapore le solvant afin d'obtenir les composés recherchés.

Dans la suite de la description, les parties et pourcentages sont donnés en poids.

Pour mettre en oeuvre le procédé selon l'invention, on saponifie une cire deshuilée, dans un solvant organique non miscible à l'eau et en présence d'un alcali.

On peut ainsi saponifier toute cire naturelle présentant de préférence une teneur élevée en composés insaponifiables, et une teneur faible en acides gras insaturés.

On peut utiliser, par exemple, une cire d'origine végétale telle qu'une cire de son de riz, une cire de carnauba ou une cire de candelilla, ou une cire d'origine animale la cire d'abeille par exemple.

Le présent procédé est également applicable à une cire contenant principalement des acides gras insaturés, telle que l'huile de Jojoba.

La cire doit être préalablement déshuilée, c'est-à-dire séparée des glycérides, en particulier des triglycérides, qu'elle pourrait contenir à l'état naturel.

La saponification est effectuée dans un solvant organique non miscible à l'eau et susceptible de dissoudre les cires à saponifier et l'alcali, ainsi que les insaponifiables recherchés. On emploie, de préférence, un solvant dont le point d'ébullition n'est pas trop bas, de préférence supérieur à 75-80°C, afin de pouvoir chauffer suffisamment le milieu réactionnel et hydrolyser complètement les cires.

Le butanol ou le pentanol sont de préférence utilisés.

L'alcali utilisé est tout alcali susceptible de saponifier une cire, l'hydroxyde de potassium par exemple.

La saponification peut être effectuée à 95-120°C, sous agitation constante, pendant 1 à 2 heures.

Le mélange saponifié est alors acidifié jusqu'à un pH de 2,5-4,0 par exemple par ajout d'une solution aqueuse d'un acide fort, tel que l'acide sulfurique.

On peut notamment ajouter 75-100 parties d'une solution aqueuse d'acide sulfurique à 3-6%, à 100 parties de mélange saponifié.

On peut homogénéiser le mélange acidifié pendant 10-20 minutes, à une température de 75-85°C afin d'obtenir une acidification complète, puis laisser décanter afin que les phases aqueuse et organique se séparent.

On écarte la phase aqueuse, qui contient, entre autre, le sel de l'acide fort, formé lors de l'acidification ainsi que l'acide en excès.

La phase organique, quant à elle, contient entre autre, les composés insaponifiables recherchés ainsi que des acides gras saturés et insaturés.

On ajoute à la phase organique un hydroxyde de métal alcalino-terreux de manière à former les sels métalliques desdits acides gras libres.

On choisit de préférence l'hydroxyde de métal alcalino-terreux de manière que les sels d'acides gras formés

2

soient insolubles dans le solvant organique utilisé.

On peut notamment utiliser les hydroxydes de baryum ou de magnésium, et de préférence l'hydroxyde de calcium.

On peut, par exemple, mélanger 2 à 4 parties d'hydroxyde à 100 parties de phase organique, laisser le mélange réagir pendant 1 à 3 heures à 70-90°C sous agitation constante afin que les sels métalliques des acides gras se forment puis écarter les éventuels insolubles formés par filtration à chaud, à 70-90°C.

On a constaté qu'une partie seulement des sels d'acides gras précipitaient, principalement les sels d'acides saturés, les sels d'acides insaturés restant généralement en solution, avec les composés insaponifiables recherchés, dans la phase organique.

On écarte les éventuels insolubles formés, par exemple par filtration à chaud, puis l'on évapore le solvant organique, afin d'obtenir les composés insaponifiables recherchés.

On peut alors recristalliser ces composés, dans un solvant approprié, de manière à écarter, entre autre, les sels des acides gras qui n'ont pas précipités.

La présente invention est illustrée plus en détail dans les exemples suivants.

Exemple 1

On prépare un mélange comprenant 100 g de cires de son de riz, 30 g d'hydroxyde de potassium à 85% et 1 litre de butanol-1.

On place le mélange sous azote et on le chauffe à 100-105°C pendant environ 60 minutes, tout en maintenant une agitation constante de 60 tours par minute.

On ajoute au mélange saponifié une solution aqueuse comprenant 750 ml d'eau et 25 g d'acide sulfurique à 98%.

On maintient le mélange sous agitation constante, pendant 5 minutes, à une température de environ 80°C, afin que l'acidification soit complète.

On laisse ensuite décanter le mélange et il se forme deux phases, une phase aqueuse dans la partie inférieure et une phase organique surnageante.

On écarte la phase aqueuse qui présente un pH de environ 3 et on réserve la phase organique. On ajoute 30 g d'hydroxyde de calcium à la phase organique, et on maintient le mélange à environ 80°C et sous agitation constante pendant 60 minutes. Les sels de calcium des acides gras saturés présents dans la phase butanolique précipitent sous forme de cristaux beiges.

On ajoute au mélange un support de filtration sous la forme de 40 g de Célite et l'on agite pendant 5 minutes à 80°C.

On filtre la phase butanolique à chaud et on lave le résidu avec 100 ml de butanol-1 à 80°C.

On évapore le butanol contenu dans la phase butanolique sous pression réduite, dans un évaporateur rotatif tournant à 60 tours par minute, à 70°C. On obtient ainsi 60 g d'un produit brut se présentant sous forme d'une cire brune cassante, contenant encore des traces de butanol.

On peut recristalliser le produit brut, par exemple par dissolution de la cire dans un litre d'éthanol à 94% à 70-80°C, agitation pendant 30 minutes, filtration à chaud à 70°C puis évaporation sous pression réduite de l'éthanol.

On obtient ainsi 52,5 g d'un produit final se présentant sous forme d'une poudre beige.

Le tableau ci-après donne la composition du produit final ainsi obtenu, déterminée par chromatographie en phase gazeuse - spectre de masse (GC/MS):

Tableau 1             %

Acides gras résiduels           5,8

dont

      - acide palmitique (C 16:0)     1

      - acide béhénique (C 22:0)     1

      - acide lignocérique (C 24:0)    1,8

Alcools                    90

dont

      - octacosanol ($C_{28}$)      12

      - triacontanol ($C_{30}$)      22

      - dotriacontanol ($C_{32}$)    18

      - tétratriacontanol ($C_{34}$)   15

Autres (dont alcanes, alcénes,

stérols et lactones)          4,2

Le présent procédé permet donc d'obtenir, avec un rendement de l'ordre de 53%, les composés recherchés qui sont principalement des alcools gras à longue chaîne ($C_{16}$ à $C_{38}$).

Exemple 2

De manière semblable à celle décrite à l'exemple 1, on extrait les insaponifiables d'une cire de carnauba et d'une cire de candelilla.

On obtient les résultats suivants:

|  | Cire de carnauba | Cire de candelilla |
|---|---|---|
| Rendement final | 53,1% | 53,2% |
| Acides gras résiduels | 3,8% | 7,4% |
| Alcools | 90,0% | 88,0% |
| Alcools principaux | $C_{28}$-$C_{34}$ | $C_{28}$-$C_{34}$ |

Le présent procédé permet donc bien d'obtenir les composés recherchés, avec un rendement de l'ordre de 53%, a partir de diverses cires.

Exemple 3

On prépare un mélange comprenant 100 g d'huile de Jojoba, 30 g d'hydroxyde de potassium et 1 litre de butanol, que l'on saponifie de manière semblable à celle décrite à l'exemple 1.

Après saponification, on ajoute au mélange 750 ml d'une solution aqueuse d'acide sulfurique à 3%, on agite pendant 5 minutes à 80°C et on laisse décanter.

On écarte la phase aqueuse qui présente un pH de 3 environ, on ajoute 30 g d'hydroxyde de calcium à la phase organique et on maintient une agitation constante à 80° C, pendant 60 minutes.

On n'observe pas de formation et précipitation des sels d'acides gras, ce qui est probablement dû au fait que les acides contenus dans l'huile de Jojoba étant principalement des acides gras insaturés, leurs sels sont solubles dans le butanol.

On filtre à chaud la phase organique et l'on évapore le butanol sous pression réduite, à 70°C.

On obtient 106 g d'un produit brut se présentant sous forme d'une huile qui contient les composés recherchés ainsi que les sels des acides gras présents.

Afin d'éliminer ces sels d'acides, on dissout le produit brut dans 1000 ml d'acétone à 50°C et l'on agite pendant 30 minutes.

Les sels des acides gras encore présents précipitent sous forme de cristaux beiges.

On filtre le mélange à 25°C et l'on évapore l'acétone sous pression réduite.

On obtient 50,2 g de produit final se présentant sous forme d'une huile à légère coloration jaune.

La composition du produit final, déterminée par GC/MS est la suivante:

| Acides gras résiduels | 0,4% |
|---|---|
| Alcools | 98,0% |
| Autres | 1,6% |

Le présent procédé permet donc d'obtenir, avec un rendement de l'ordre de 50%, les composés recherchés, essentiellement des alcools gras monoinsaturés, principalement le 11-eicosenol et le 13-docosenol qui constituent, respectivement 33 et 37% des alcools obtenus.

Exemple 4

On prépare un mélange comprenant 100 g d'huile de Jojoba, 30 g d'hydroxyde de potassium et 1 litre de butanol, que l'on saponifie de manière semblable à celle décrite à l'exemple 1.

Après saponification, on ajoute au mélange 750 ml d'une solution aqueuse d'acide sulfurique à 3%, on agite pendant 5 minutes à 80°C et on laisse décanter. On écarte la phase aqueuse qui présente un pH de 3 environ, on ajoute 70 g d'hydroxyde de baryum $Ba(OH)_2$, 8 $H_2O$ à la phase organique et on maintient une agitation constante à 80°C, pendant 30 minutes.

On n'observe pas de formation et précipitation des sels d'acides gras, ce qui est probablement dû au fait que les acides contenus dans l'huile de Jojoba étant principalement des acides gras insaturés, leurs sels sont solubles dans le butanol.

On filtre à froid la phase organique et l'on évapore le butanol sous pression réduite, à 70°C.

On obtient 80 g d'un produit brut se présentant sous forme d'une huile, qui contient les composés recherchés ainsi que les sels des acides gras présents.

Afin d'éliminer ces sels d'acides, on dissout le produit brut dans 500 ml d'éthanol à 94%, à 25°C et l'on agite pendant 30 minutes.

Les sels des acides gras encore présents précipitent sous forme de cristaux blancs.

On filtre le mélange à 25°C et l'on évapore l'éthanol sous pression réduite.

On obtient 48,4 g de produit final se présentant sous forme d'une huile présentant une teneur en sels de baryum d'acides gras de 2%.

**Revendications**

1.  Procédé d'obtention de composés insaponifiables dans lequel on saponifie une cire deshuilée dans un solvant organique non miscible à l'eau en présence d'un alcali, on acidifie le mélange saponifié jusqu'à pH 2,5 -4,0, par ajout d'une solution aqueuse d'acide, on écarte la phase aqueuse, on ajoute un hydroxyde de métal alcalino-terreux à la phase organique, on écarte les éventuels insolubles formés et l'on évapore le solvant afin d'obtenir les composés recherchés.

2.  Procédé selon la revendication 1, caractérisé par le fait que l'hydroxyde d'alcalino-terreux est de l'hydroxyde de calcium ou de l'hydroxyde de baryum.

3.  Procédé selon la revendication 1, caractérisé par le fait que le solvant organique est choisi parmi le butanol et le pentanol.

**Patentansprüche**

1. Verfahren zur Herstellung von unverseifbaren Verbindungen, bei dem man ein entöltes Wachs in einem nicht mit Wasser mischbaren organischen Lösungsmittel in Anwesenheit eines Alkalis verseift, das verseifte Gemisch durch Beigabe einer wässrigen Säurelösung bis zu einem pH von 2,5 bis 4,0 ansäuert, die wässrige Phase entfernt, der organischen Phase ein Erdalkalimetallhydroxid beigibt, die ggf. gebildeten unlöslichen Bestandteile entfernt und das Lösungsmittel abdampft, um die gesuchten Verbindungen zu erhalten.

2. Verfahren nach Anspuch 1, dadurch gekennzeichnet, daß das Erdalkalihydroxid Calciumhydroxid oder Bariumhydroxid ist.

3. Verfahren nach Anspruch 1, dadurch gekennzeichnet, daß das organische Lösungsmittel aus Butanol und Pentanol ausgewählt ist.

**Claims**

1. A process for obtaining unsaponifiable compounds, in which a wax freed from oil is saponified in a water-immiscible organic solvent in the presence of an alkali, the saponified mixture is acidified to pH 2.5-4.0 by addition of an aqueous acid solution, the aqueous phase is removed, an alkaline-earth metal hydroxide is added to the organic phase, any insoluble fractions formed are removed and the organic solvent is evaporated to obtain the required compounds.

2. A process as claimed in claim 1, characterized in that the alkaline-earth metal hydroxide is calcium hydroxide or barium hydroxide.

3. A process as claimed in claim 1, characterized in that the organic solvent is selected from butanol and pentanol.